# EUROPÄISCHE PATENTSCHRIFT

(11) **EP 1 674 769 B1**
(45) Veröffentlichungstag und Bekanntmachung des Hinweises auf die Patenterteilung: **19.09.2007**
(21) Anmeldenummer: 04030372.9
(22) Anmeldetag: 21.12.2004
(51) Int. Cl.: F16J 15/06, F16L 23/16

(54) **Dichtungssystem**
Sealing arrangement
Dispositif d'étanchéité

(43) Veröffentlichungstag der Anmeldung: 28.06.2006
(73) Patentinhaber: Carl Freudenberg KG, 69469 Weinheim (DE)
(72) Erfinder: Klenk, Thomas, 69214 Eppelheim (DE); Bock, Eberhard, 69509 Mörlenbach (DE); Röhner, Gerhard, 69502 Hemsbach (DE); Kremer, Friedrich, 04416 Markkleeberg (DE); Liedke, Ulrich, 69514 Laudenbach (DE)

(56) Entgegenhaltungen:
- EP-A- 0 187 554
- EP-A- 0 695 898
- DE-A1- 1 907 641
- DE-A1- 3 006 656
- DE-B3- 10 305 110
- US-A- 3 704 021
- US-A1- 2003 042 688
- F.W. REUTER: "Dichtungen in der Verfahrenstechnik" 1990, RESCH VERLAG , GRÄFELFING , XP002328628 * Absatz [2.3.2.1] *

## Beschreibung

### Technisches Gebiet

Die Erfindung betrifft ein Dichtungssystem zur Abdichtung eines Rohrflansches, umfassend zumindest ein Dichtelement und radial außerhalb des Dichtelements zumindest ein dielektrisches Element zur Erfassung von Zustandsparametern des Dichtungsystems.

### Stand der Technik

Ein derartiges Dichtungssystem ist aus der DE 103 05 110 B3 bekannt. Das Dichtungssystem wird zur Abdichtung beispielsweise eines Behälters oder einer Rohrleitung eingesetzt. Das vorbekannte Dichtungssystem erlaubt mittels des dielektrischen Elements die Erfassung von Zustandsparametern des Dichtungssystems. Durch die erfassten Zustandsparameter ist es möglich, eine Leckage zu detektieren. Des weiteren ermöglicht das dielektrische Element indirekt die Überprüfung einer Flanschverbindung, da die korrekte Einbaulage des dielektrischen Elements erfasst werden kann.
Bei der Verwendung als Rohrflanschdichtung werden die Kräfte der Verbindung vollständig über das Dichtelement übertragen. Bei einer Rohrleitung, die Medien unter einem großen Druck oder schwankenden Drücken überträgt, überträgt das Dichtelement des vorbekannten Dichtungssystems daher auch die großen Schraubenanzugsmomenten der Rohrflanschverbindung. Aus der EP 0 695 898 A1 ist eine Flachdichtung für eine Flanschverbindung bekannt, bei dem ein Dichtelement in Ausnehmungen eines Stützringes angeordnet ist, wobei die Kraftübertragung im Krafthauptschluss über den Stütztring erfolgt und das Dichtelement im Kraftnebenschluss angeordnet ist.

### Darstellung der Erfindung

Der Erfindung liegt die Aufgabe zugrunde, das Dichtungssystem der eingangs genannten Art derart weiterzuentwickeln, dass das Dichtelement von den statischen und dynamischen Belastungen der Rohrflanschverbindung entlastet wird und dass das dielektrische Element nicht in die Dichtfunktion eingreift.

Diese Aufgabe wird mit den Merkmalen von Patentanspruch 1 gelöst. Auf vorteilhafte Ausgestaltungen nehmen die Unteransprüche Bezug.

Zur Lösung der Aufgabe ist das Dichtelement nur im Kraftnebenschluss und das dielektrische Element im Krafthauptschluss angeordnet. Das dielektrische Element, welches in Krafthauptschluss angeordnet ist, überträgt dabei den Großteil der in der Rohrverbindung auftretenden Kräfte. Das sind insbesondere die statischen Belastungen, die durch die Schraubenanzugsmomente resultieren und dynamische Belastungen durch Druck- oder Temperaturänderungen innerhalb oder außerhalb der Verbindung entstehen. Das Dichtelement, welches im Kraftnebenschluss angeordnet ist, überträgt lediglich eine definierte Vorspannkraft, die für die Dichtwirkung der Dichtung notwendig ist. Das Dichtelement überträgt demnach nur einen kleinen und definierten Teil der statischen Belastungen. Dynamische Belastungen werden nicht über die Dichtung übertragen, sondern über das dielektrische Element. Durch die Trennung von Dichtelement und dielektrischem Element verbessern sich außerdem die Dichteigenschaften des Dichtelements. Die bei einem einzigen Element unvermeidlichen Störungen der Dichtstruktur im Bereich des dielektrischen Elements sowie die entstehenden Leckagekanäle werden bei dem erfindungsgemäßen Dichtsystem vermieden.

Das dielektrische Element kann in einem Stützring integriert sein. Dadurch ist auch das dielektrische Element von dynamischen und zu großen statischen Belastungen entlastet. Der Stützring kann aus einem metallischen Werkstoff oder aus einem Kunststoff hoher Festigkeit gebildet sein. Bei einer Rohrflanschverbindung mit Krafthauptschluss über einen Stützring kann eine Nut für die Elemente des Dichtsystems entfallen.

Das Dichtelement und/oder das dielektrische Element kann in einer ringförmigen Nut eines Rohrflansches angeordnet sein. Durch die Nut sind die Elemente des Dichtungssystem in ihrer Lage fixiert, so dass insbesondere bei der Montage immer eine konzentrische Lage des Dichtelements und des dielektrischen Elements gewährleistet ist. Des weiteren ist zwischen dem Flansch und dem Gegenflansch nur noch ein geringer Spalt, was das Eindringen von groben Verschmutzungen verhindert.

Das dielektrische Element kann beabstandet zu dem Dichtelement angeordnet sein. Der Abstand ermöglicht eine verzögerte Detektion einer durch das Dichtelement hindurchtretenden Leckage durch das dielektrische Element. Eine Verzögerung der Detektion kann erwünscht sein, wenn eine gewisse Leckage tolerabel ist.

Das dielektrische Element kann benachbart zu dem Dichtelement angeordnet sein. Dadurch werden durch das Dichtelement hindurchtretende Leckagen unmittelbar und ohne Verzögerung durch das dielektrische Element detektiert. Eine unmittelbare Detektion von Leckagen ist insbesondere bei gefährlichen Medien erforderlich.

Das dielektrische Element kann mittels einer Klebeverbindung mit dem Dichtelement verbunden sein. Durch eine Klebeverbindung ergibt sich ein vormontierbares Dichtsystem, welches besonders einfach montierbar ist. Der Abstand des Dichtelements und des dielektrischen Elements kann durch die Klebeverbindung über den Umfang konstant gehalten werden.

Das dielektrische Element kann radial außenumfangsseitig zumindest eine Sekundärdichtung aufweisen. Die Sekundärdichtung verhindert das Eindringen von Verschmutzungen von außen, die die Funktion des dielektrischen Elements beeinträchtigen können.

Im Krafthauptschluss können zwei dielektrische Elemente angeordnet sein. Mittels des dielektrischen Elementes können verschiedene Zustandsparameter des Dichtungssystems und der Rohrverbindung ermittelt werden. Beim Einsatz mehrerer dielektrischer Elemente ist die gleichzeitige und unabhängige Messung dieser verschiedenen Parameter möglich.

Ein dielektrisches Element kann zur Leckageüberwachung und ein weiteres dielektrisches Element kann zur Kontaktüberwachung der Flanschverbindung ausgebildet sein. Die Kontaktüberwachung kann dabei durch die Messung der Kontaktflächenpressung erfolgen. Die Messung der Kontaktflächenpressung bildet dabei ein Maß der über den Krafthauptschluss geleiteten Belastungen.

Das zumindest eine Dichtelement und das zumindest eine dielektrische Element können einstückig ausgebildet sein. Das Dichtsystem ist dann als integriertes Bauteil ausgebildet und bildet ebenfalls eine vormontierbare Einheit, die einfach montierbar ist.

### Kurzbeschreibung der Zeichnung

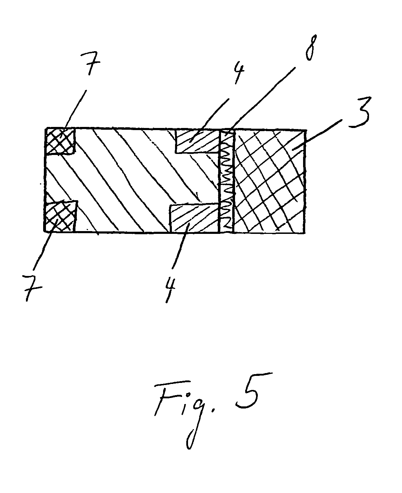

Einige Ausführungsbeispiele des erfindungsgemäßen Dichtungssystems werden nachfolgend anhand der Figuren 1 bis 5 dargestellt. Diese zeigen, jeweils schematisch:
- Fig. 1: das erfindungsgemäße Dichtungssystem mit in einen Stützring integrierten dielektrischen Elementen;
- Fig. 2: das Dichtungssystem in einer einzigen Ringnut angeordnet;
- Fig. 3: das Dichtelement und das dielektrische Element in separaten Ringnuten;
- Fig. 4: das Dichtungssystem als integriertes Bauelement in der Draufsicht;
- Fig. 5: das integrierte Bauelement im Querschnitt.

### Ausführung der Erfindung

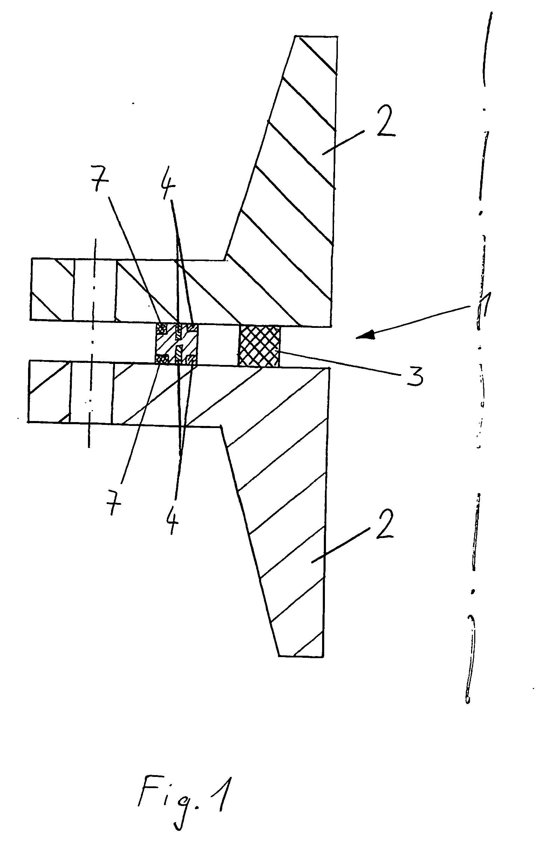

Figur 1 zeigt einen Rohrflansch 2, der durch ein Dichtungssystem 1 abgedichtet ist. Das Dichtungssystem 1 setzt sich aus einem Dichtelement 3 und einem dielektrischen Element 4 zusammen. Das Dichtelement 3 ist in dieser Ausführung durch eine Weichstoffdichtung gemäß DIN 28091 aus elastomerem Werkstoff gebildet. Das Dichtelement kann in anderen Ausführungen auch durch eine Gummi-Stahldichtung, eine Kammprofildichtung, oder eine Spiraldichtung beispielsweise mit PTFE und Graphit gebildet sein. Das radial außerhalb des Dichtelements 3 angeordnete dielektrische Element 4 ist in einem Stützring 5 integriert. Der Stützring 5 ist in dieser Ausführung aus einem metallischen Werkstoff gebildet und bildet den Krafthauptschluss der Rohrverbindung. Das bedeutet, dass über den Stützring alle wesentlichen Kräfte übertragen werden. Das Dichtelement 3 ist im Kraftnebenschluss angeordnet. Das bedeutet, dass das Dichtelement 3 nur die zur Dichtwirkung erforderlichen Kräfte (Dichtkraft) aufnimmt. Der Stützring 5 weist zwei dielektrische Elemente 4 auf, die sich über den gesamten Umfang des ringförmigen Stützrings 5 erstrecken. Ein dielektrisches Element 4 ist als Detektor zur Erfassung einer Leckage des Dichtsystems 1 ausgebildet. Das andere dielektrische Element 4 erfasst die Kontaktflächenpressung des Stützrings 5. Die Erfassung der Zustandsparameter erfolgt durch Messung der Änderung des dielektrischen Verhaltens des zwischen den Kondensatorplatten des dielektrischen Elements 4 angeordneten Dielektrikums. Die Änderung kann aus der Änderung des Abstandes der Kondensatorplatten oder der Aufnahme von Leckageflüssigkeit durch das Dielektrikum resultieren. Der Stützring 5 weist außenumfangsseitig zwei Sekundärdichtungen 7 auf, die sich ringförmig um den Stützring 5 erstrecken und die Verbindung von Stützring 5 und Rohrflansch 2 abdichten. Die Sekundärdichtungen 7 sind aus elastomerem Werkstoff gebildet und in den Stützring 5 vulkanisiert.

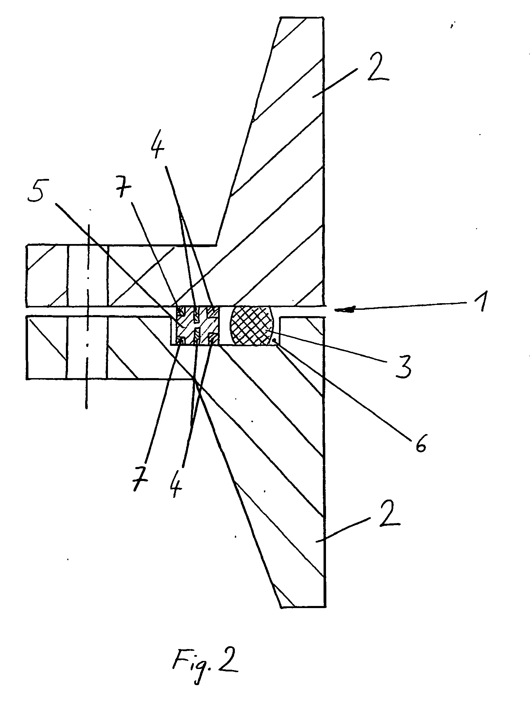

Figur 2 zeigt ein Dichtungssystem 1 gemäß Figur 1, wobei das Dichtelement 3 und das dielektrische Element 4 in einer gemeinsamen ringförmigen Nut 6 eines Rohrflansches 2 angeordnet sind. Das Dichtelement 3 und das dielektrische Element 4 sind in dieser Ausführung einander benachbart angeordnet. Das Dichtelement 3 ist in dieser Ausführung durch einen O-Ring gebildet.

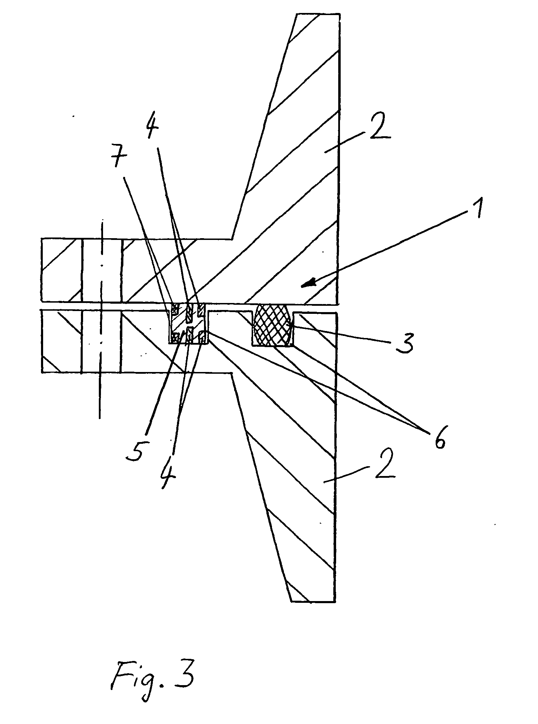

Figur 3 zeigt ein Dichtungssystem 1 gemäß Figur 1, wobei das Dichtelement 3 und das dielektrische Element 4 in jeweils einer separaten ringförmigen Nut 6 eines Rohrflansches 2 angeordnet sind. Dadurch sind das Dichtelement 3 und das dielektrische Element 4 benachbart zueinander angeordnet.

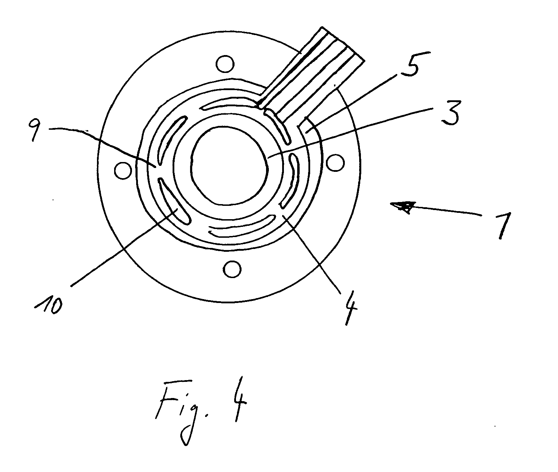

Figur 4 das Dichtungssystem 1 als ein integriertes Bauelement. Das Dichtungssystem 1 umfasst ein Dichtelement 3 zur Anordnung im Kraftnebenschluss aus einem elastomerem Werkstoff und einen Stützring 5 aus hochbelastbaren Kunststoff zur Anordnung im Krafthauptschluss in den zwei dielektrische Elemente 4 integriert sind. Der Stützring 5 mit den dielektrischen Elementen 4 und das Dichtelement 3 sind separat hergestellt und mittels einer Klebeverbindung 8 miteinander verbunden. Durch die Klebeverbindung sind das Dichtelement 3 und das dielektrische Element 4 einstückig ausgebildet und bilden eine vormontierbare Einheit. Das dielektrische Element 4 ist aus einer ringförmig ausgebildeten nanoporösen Membran 9 gebildet in die, über den Umfang verteilt, Elektrodenarrays 10 eingebettet sind. Dabei nimmt die nanoporöse Membran 9 eine auftretende Leckage auf, die durch die Elektrodenarrays 10 detektiert wird. Der Stützring 5 weist außenumfangsseitig zwei ringförmige Sekundärdichtungen 7 auf.

## Patentansprüche

1. Dichtungssystem (1) zur Abdichtung eines Rohrflansches (2), umfassend zumindest ein Dichtelement (3) und radial außerhalb des Dichtelements (3) zumindest ein dielektrisches Element (4) zur Erfassung von Zustandsparametern des Dichtsystems, **dadurch gekennzeichnet, dass** das Dichtelement (3) nur im Kraftnebenschluss und das dielektrische Element (4) im Krafthauptschluss angeordnet ist.

2. Dichtungssystem nach Anspruch 1, **dadurch gekennzeichnet, dass** das dielektrische Element (4) in einem Stützring (5) integriert ist.

3. Dichtungssystem nach Anspruch 1 oder 2, **dadurch gekennzeichnet, dass** das Dichtelement (3) und/oder das dielektrische Element (4) in einer ringförmigen Nut (6) eines Rohrflansches (2) angeordnet ist.

4. Dichtungssystem nach einem der Ansprüche 1 bis 3, **dadurch gekennzeichnet, dass** das dielektrische Element (4) beabstandet zu dem Dichtelement (3) angeordnet ist.

5. Dichtungssystem nach einem der Ansprüche 1 bis 3, **dadurch gekennzeichnet, dass** das dielektrische Element (4) benachbart zu dem Dichtelement (3) angeordnet ist.

6. Dichtungssystem nach Anspruch 5, **dadurch gekennzeichnet, dass** das dielektrische Element (4) mittels einer Klebeverbindung (8) mit dem Dichtelement (3) verbunden ist.

7. Dichtungssystem nach einem der Ansprüche 1 bis 6, **dadurch gekennzeichnet, dass** das dielektrische Element (4) radial außenumfangsseitig zumindest eine Sekundärdichtung (7) aufweist.

8. Dichtungssystem nach einem der Ansprüche 1 bis 7, **dadurch gekennzeichnet, dass** im Krafthauptschluss zwei dielektrische Elemente (4) angeordnet sind.

9. Dichtungssystem nach Anspruch 8, **dadurch gekennzeichnet, dass** ein dielektrisches Element (4) zur Leckageüberwachung und ein weiteres dielektrisches (4) Element zur Kontaktüberwachung der Flanschverbindung ausgebildet ist.

10. Dichtungssystem nach einem der Ansprüche 1 bis 9, **dadurch gekennzeichnet, dass** das zumindest eine Dichtelement (3) und das zumindest eine dielektrische Element (4) einstückig ausgebildet sind.

## Claims

1. Sealing arrangement (1) for a sealing a pipe flange (2), comprising at least one sealing element (3) and, radially outside the sealing element (3), at least one dielectric element (4) for detecting characteristic parameters of the sealing system, **characterized in that** the sealing element (3) is arranged only in the secondary force connection and the dielectric element (4) is arranged in the main force connection.

2. Sealing arrangement according to Claim 1, **characterized in that** the dielectric element (4) is integrated in a supporting ring (5).

3. Sealing arrangement according to Claim 1 or 2, **characterized in that** the sealing element (3) and/or the dielectric element (4) is/are arranged in an annular groove (6) of a pipe flange (2).

4. Sealing arrangement according to one of Claims 1 to 3, **characterized in that** the dielectric element (4) is arranged at a distance from the sealing element (3).

5. Sealing arrangement according to one of Claims 1 to 3, **characterized in that** the dielectric element (4) is arranged adjacent to the sealing element (3).

6. Sealing arrangement according to Claim 5, **characterized in that** the dielectric element (4) is connected to the sealing element (3) by means of an adhesive connection (8).

7. Sealing arrangement according to one of Claims 1 to 6, **characterized in that** the dielectric element (4) has at least one secondary seal (7) radially on the outer circumference.

8. Sealing arrangement according to one of Claims 1 to 7, **characterized in that** two dielectric elements (4) are arranged in the main force connection.

9. Sealing arrangement according to Claim 8, **characterized in that** one dielectric element (4) is designed for monitoring leakage and a further dielectric element (4) is designed for monitoring the contact of the flange connection.

10. Sealing arrangement according to one of Claims 1 to 9, **characterized in that** the at least one sealing element (3) and the at least one dielectric element (4) are designed as a single piece.

## Revendications

1. Système d'étanchéité (1) destiné à assurer l'étanchéité d'une bride (2) pour tube, qui comprend au moins un élément d'étanchéité (3) et au moins un élément diélectrique (4) qui permet de détecter des paramètres d'état du système d'étanchéité et qui est disposé radialement à l'extérieur de l'élément d'étanchéité (3), **caractérisé en ce que** l'élément d'étanchéité (3) est disposé uniquement dans la partie peu exposée aux forces et l'élément diélectrique (4) dans la partie fort exposée aux forces.

2. Système d'étanchéité selon la revendication 1, **caractérisé en ce que** l'élément diélectrique (4) est intégré dans un anneau de soutien (5).

3. Système d'étanchéité selon les revendications 1 ou 2, **caractérisé en ce que** l'élément d'étanchéité (3) et/ou l'élément diélectrique (4) sont disposés dans une rainure annulaire (6) d'une bride (2) pour tube.

4. Système d'étanchéité selon l'une des revendications 1 à 3, **caractérisé en ce que** l'élément diélectrique (4) est disposé à distance de l'élément d'étanchéité (3).

5. Système d'étanchéité selon l'une des revendications 1 à 3, **caractérisé en ce que** l'élément diélectrique (4) est disposé au voisinage de l'élément d'étanchéité (3).

6. Système d'étanchéité selon la revendication 5, **caractérisé en ce que** l'élément diélectrique (4) est relié à l'élément d'étanchéité (3) par une liaison collée (8).

7. Système d'étanchéité selon l'une des revendications 1 à 6, **caractérisé en ce que** l'élément diélectrique (4) présente au moins un joint d'étanchéité secondaire (7) du côté radialement extérieur de la périphérie.

8. Système d'étanchéité selon l'une des revendications 1 à 7, **caractérisé en ce que** deux éléments diélectriques (4) sont disposés dans la partie fort exposée aux forces.

9. Système d'étanchéité selon la revendication 8, **caractérisé en ce qu'**élément diélectrique (4) est configuré pour la surveillance des fuites et un autre élément diélectrique (4) pour la surveillance du contact de la liaison par bride.

10. Système d'étanchéité selon l'une des revendications 1 à 9, **caractérisé en ce qu'**au moins un élément d'étanchéité (3) et le ou les éléments diélectriques (4) sont formés d'un seul tenant.
